# NEUE EUROPÄISCHE PATENTSCHRIFT

(11) **EP 3 288 987 B2**
(45) Veröffentlichungstag und Bekanntmachung des Hinweises auf die Entscheidung über den Einspruch: **28.12.2022**
(45) Hinweis auf die Patenterteilung: 12.06.2019
(21) Anmeldenummer: 16720805.7
(22) Anmeldetag: 29.04.2016
(51) Int. Cl.: C08F 265/06, C08F 220/14, C08F 220/18, C08K 3/04

(54) **VERWENDUNG VON ACRYLATKAUTSCHUKEN MIT VERBESSERTEN TIEFTEMPERATUREIGENSCHAFTEN UND GUTER ÖLBESTÄNDIGKEIT ZUR HERGESTELLUNG VULKANISIERBARER MISCHUNGEN UND VULKANISATE**
USE OF ACRYLATE RUBBERS WITH IMPROVED LOW TEMPERATURE PROPERTIES AND GOOD OIL RESISTANCE IN VULCANISABLE COMPOUNDS AND IN THE VULCANISATES MADE FROM SUCH COMPOUNDS
UTILISATION DE CAOUTCHOUC DE TYPE ACRYLATE PRÉSENTANT DES PROPRIÉTÉS CRYOGÉNIQUES AMÉLIORÉES ET UNE RÉSISTANCE SATISFAISANTE À L'HUILE POUR DES MÉLANGES POUVANT ÊTRE VULCANISÉS ET VULCANISATS AINSI OBTENUS

(30) Priorität: 30.04.2015 EP 15165824
(43) Veröffentlichungstag der Anmeldung: 07.03.2018
(73) Patentinhaber: ARLANXEO Deutschland GmbH, 41540 Dormagen (DE)
(72) Erfinder: KALKOFEN, Rainer, 51379 Leverkusen (DE); FRENZEL, Ulrich, 41542 Dormagen (DE); SALEM, Hiyam, 50733 Köln (DE); TASCHNER, Frank, 40789 Monheim (DE); LIEBER, Susanna, 67663 Kaiserslautern (DE)
(86) Internationale Anmeldenummer: PCT/EP2016/059613
(87) Internationale Veröffentlichungsnummer: WO 2016/174203

(56) Entgegenhaltungen:
- DE-A- 2 953 631
- DE-A1- 19 942 301
- FR-A1- 2 961 513
- JP-A- 2007 186 631
- JP-A- 2015 059 208
- US-A- 4 323 666
- US-A- 5 216 101

## Beschreibung

Polymerisate von Acrylatmonomeren und Copolymerisate von Ethylen und Acrylatmonomeren, insbesondere Acrylatkautschuke (ACM) und Ethylen-AcrylatCopolymerisate (AEM), sind großtechnisch hergestellte Kautschuke, aus denen, z.B. durch radikalische Vernetzung oder Vernetzung mit Hilfe in der Hauptkette eingebauter Cure-site Monomere, Vulkanisate hergestellt werden können, die sich insbesondere durch gute Öl- und Medienbeständigkeit sowie exzellente Alterungsbeständigkeit auszeichnen.

Die derzeit auf dem Markt erhältlichen ACM- und AEM-Kautschuke erfüllen allerdings die immer wichtiger werdende Anforderung einer guten Tieftemperaturflexibilität in Kombination mit einer niedrigen Ölquellung nur unzureichend, da eine Verbesserung der Ölbeständigkeit bisher nur bei gleichzeitiger Verschlechterung der Tieftemperaturflexibilität möglich war. Typischerweise besteht bei AEM- und ACM-Kautschuken ein Zusammenhang zwischen Glasübergangstemperatur und Ölquellung, wobei bei erhöhter Polarität des eingesetzten Acrylates die Ölquellung abnimmt, gleichzeitig jedoch die Glasübergangstemperatur ansteigt und umgekehrt. Versuche, durch Einbau von verschiedenen zusätzlichen Comonomeren eine Reduzierung der Glasübergangstemperatur bei gleichbleibender Ölquellung oder eine Reduktion der Ölquellung bei gleichbleibender Glasübergangstemperatur zu erreichen, führten in der Vergangenheit nicht zu ausreichenden Erfolgen.

In der Literatur sind verschiedene Ansätze zu Verbesserungen der Tieftemperatureigenschaften von ACM und AEM Kautschuken beschrieben:
Der Einsatz von Weichmachern zur Verbesserung der Tieftemperatureigenschaften von ACM- und AEM-Vulkanisaten ist möglich. Allerdings sind insbesondere die im Hinblick auf eine Verbesserung der Tieftemperatureigenschaften wirksamsten Weichmacher, wie z.B. Rhenosin 759, Dioctyladipat (DOA), Dioctylsebacat (DOS) oder Zitronensäurester wie z.B. Acetyltri(2-ethylhexyl)citrat oder Acetyltributylcitrat relativ flüchtig und führen daher häufig zu Problemen bei der Wärmealterung der Vulkanisate, was im Falle von ACM und AEM besonders problematisch ist, da diese Kautschuke bevorzugt in Hochtemperaturanwendungen eingesetzt werden. Zudem ist die Menge des Weichmachers, der zugegeben werden kann, limitiert, da sonst die geforderte Härte bzw. sonstige gummitechnische Eigenschaften wie z.B. Reißdehnung und/oder Zugfestigkeit nicht mehr erreicht werden können. Probleme kann es zudem durch Ausschwitzen des Weichmachers, eine Migration des Weichmachers aus dem Gummi oder seine Extraktion geben. Eine Absenkung der Glastemperatur des verwendeten Kautschuks ist somit einem bloßen Weichmachereinsatz vorzuziehen: Der Mischungsentwickler bekommt zum einen mehr Flexibilität bei der Auswahl des Weichmachers und seiner Dosierung, oder er kann ggf. sogar völlig auf eine Zugabe desselben verzichten ohne Abstriche bei den Tieftemperatureigenschaften des Gummis oder der Wärmealterung machen zu müssen. Zum anderen kann durch eine Kombination des verbesserten Kautschuks mit niedrigerer Glastemperatur mit geeigneten Weichmachern der Einsatztemperaturbereich des Kautschuks bzw. des daraus hergestellten Gummis nochmals zusätzlich nach unten erweitert werden.

AEM-Kautschuke sind bekannte großtechnisch hergestellte Kautschuke, die über eine gute Ölbeständigkeit, eine gute thermische Stabilität sowie über eine exzellente UV-Stabilität verfügen. Die kommerziell erhältlichen Copolymere werden aus den Monomeren Ethylen, Methylacrylat, Butylacrylat oder ähnlichen Alkylacrylaten und gegebenenfalls einem weiteren Cure-site-Monomeren wie Furmarsäuremonalkylester oder Maleinsäuremonoalkylster aufgebaut. Üblicherweise werden die Ethylen-Acrylat-Kautschuke in einem Hochdruckverfahren bei einem Druck von 900 bis 2800 bar hergestellt und bei Temperaturen von über 100 °C polymerisiert. So beschreibt US 2599123 die Herstellung von Ethylen-Methylacrylat-Maleinsäuremonoalkylester-Copolymeren in einem Batchverfahren. Die Addition eines Lösungsmittels wie Methanol während der Polymerisation, wie in US 4026851 beschrieben, verringert die Standzeiten der eingesetzten Reaktoren. Üblicherweise werden die kommerziell erhältlichen Ethylen-Acrylatkautschuke peroxidisch oder mit Polyamin bzw. Carbamidsäure geschützen Diamin wie DIAK No.1 vernetzt. Dies ist zum Beispiel in US3883472 oder US40226851 dargelegt.

In EP 1654687 wird beschrieben, dass durch den Einsatz eines Alkylacrylates, inbesondere Butylacrylat, als weiterem Monomer die Tieftemperaturflexibilität verbessert wird, gleichzeitig jedoch durch den Einsatz des weniger polaren Monomers die Ölquellung heraufgesetzt wird. Eine ausreichende Verbesserung der Tieftemperaturflexibilität bei gleichzeitiger Beibehaltung einer guten Ölquellung ist somit im Stand der Technik für AEM bisher nicht bekannt.

ACM-Kautschuke werden im Emulsionsverfahren hergestellt und bestehen aus Gemischen verschiedener Acrylate. Die gebräuchlichsten Monomere sind Ethylacrylat und Butylacrylat, meist in Verbindung mit geeigneten Cure-site-Monomeren, wie Chlorvinylacetat, Chlorethylvinylether, 4-Vinylbenzylchlorid, Glycidylmethacrylat, Acrylsäure, Maleinsäuremonoalkylester oder Fumarsäuremonoalkylester. Zur Verbesserung der Tieftemperatureigenschaften kann, wie in EP 905182 beschrieben, 2-Methoxyethylacrylat einpolymerisiert werden. Im Allgemeinen kann dabei eine längere Alkylgruppe die Kältebeständigkeit verbessern, worunter jedoch die Ölbeständigkeit leidet. Eine kürzere Alkylgruppe zeigt dann den gegenläufigen Effekt. Alkoxyacrylate verbessern sowohl Kältebeständigkeit als auch Ölbeständigkeit, wobei weiterhin Bedarf für eine weitere Verbesserung der Kältebeständigkeit besteht.

J.-F. Lutz et al. beschreiben z.B. in J. Polym. Sci., Polym. Chem. 2008, 46, 3459 und Macromolecules 2006, 39, 893 die Polymerisation von Polyethylenglycolmethacrylaten zur Synthese von Polymeren mit erhöhter, teilweise temperaturabhängiger Wasserlöslichkeit. Copolymerisate der Polyethylenglycolmethacrylate mit Ethylen und/oder anderen Acrylaten sind nicht beschrieben.

In DE 19942301 wird die Herstellung eines Polymeres, aufgebaut aus Acrylsäurealkylester, Vinylaromaten und Alkylpolyethoxyacrylaten beschrieben. Die hergestellten Polymere werden als redispergierbare Zementmodifkatoren eingesetzt. Die Verwendung der hergestellten Polymere zur Herstellung vulkanisierbarer Mischungen und Vulkanisate ist nicht offenbart, entsprechendes gilt für die Vulkanisate selbst und die Verbesserung deren Eigenschaften.

Die Aufgabe der vorliegenden Erfindung lag in der Verwendung von Acrylatpolymeren und Copolymerisaten aus Ethylen und Acrylaten zur Herstellung von vulkanisierbaren Mischungen und Vulkanisaten, welche die Nachteile des Standes der Technik vermeiden und verbesserte Tieftemperatureigenschaften in Kombination mit einer hohen Ölbeständigkeit aufweisen, wobei vorzugsweise eine Verschlechterung der Alterungseigenschaften vermieden werden soll.

Die genannte Aufgabe wird gelöst durch die Verwendung von Copolymerisaten enthaltend
i) 49 bis 99 Gew.-%, vorzugsweise 55 bis 90 Gew.-% Wiederholungseinheiten abgeleitet von mindestens einem Alkylacrylat welches von den Wiederholungeinheiten ii) verschieden ist,
ii) 1 bis 51 Gew.-% Wiederholungseinheiten abgeleitet von mindestens einem Monomer der allgemeinen Formel (I)

   CH₂=C(R¹)(COO(R²O)ₙR³) (I)

   worin
   - R¹: für Wasserstoff oder Methyl,
   - R²: jeweils unabhängig voneinander für eine lineare oder verzweigte C₂ bis C₆-Alkylengruppe
   - R³: für Wasserstoff, unsubstituiertes oder mit C₁-C₃ Alkyl substituiertes Phenyl, eine lineare oder verzweigte C₁-C₈ Alkylgruppe oder -C(=O)R⁴,
   - R⁴: für Wasserstoff oder eine lineare oder verzweigte C₁-C₈ Alkylgruppe und
   - n: für eine Zahl von 2 bis 30 steht, und
iii) 5 bis 50 Gew.-%, vorzugsweise 5 bis 45 Gew.-% Wiederholungseinheiten abgeleitet von Ethylen,
   wobei die Mengen jeweils bezogen sind auf die Gesamtmenge der Wiederholungseinheiten i) bis iii)
   wobei die Wiederholungseinheiten aus den Wiederholungseinheiten i) bis iii) bestehen.

Unter "Copolymeren" bzw. "Copolymerisaten" im Sinne dieser Erfindung werden somit Polymere verstanden, die copolymerisierte Einheiten von mindestens zwei verschiedenen Monomeren enthalten, wobei erfindungsgemäße Polymere copolymerisierte Einheiten von mindestens drei verschiedenen Monomeren enthalten.

Die zur Einführung von Wiederholungseinheiten i) geeigneten Alkylacrylate, welche von den Wiederholungeinheiten ii) verschieden sind, sind vorzugsweise ausgewählt aus Acrylaten mit einer Alkylgruppe mit 1 bis 10 Kohlenstoffatomen, wie Methylacrylat, Ethylacrylat, Propylacrylat, Isopropylacrylat, n-Butylacrylat, n-Hexylacrylat, 3-Propylheptylacrylat, 2-Ethylhexylacrylat, n-Octylacrylat, sowie Mischungen dieser Acrylate, besonders bevorzugt Methylacrylat, Ethylacrylat und n-Butylacrylat sowie Mischungen dieser Acrylate.

Die Monomere der allgemeinen Formel (I) weisen Reste R² auf, die unabhängig voneinander ausgewählt sind aus der Gruppe enthaltend Ethan-1,2-diyl, Propan-1,3-diyl, Propan-1,2-diyl, Butan-1,4-diyl, Butan-1,3-diyl, Pentan-1,3-diyl, Pentan-1,4-diyl, Pentan-1,5-diyl und 2-Methylbutan-1,4-diyl, vorzugsweise Ethan-1,2-diyl, Propan-1,3-diyl, Propan-1,2-diyl und Butan-1,4-diyl, besonders bevorzugt Ethan-1,2-diyl und Propan-1,2-diyl. Der Ausdruck "unabhängig voneinander" soll dabei verdeutlichen, dass verschiedene Reste R² in einem Molekül enthalten sein können. Die daraus resultierenden unterschiedlichen R²O Einheiten können in der Polyetherkette des Moleküls dabei beliebig statistisch, alternierend oder blockweise angeordnet sein.

Die Reste R³ der Monomere der allgemeinen Formel (I) sind ausgewählt aus der Gruppe enthaltend H, CH₃, CH₂CH₃, CH₂CH₂CH₃, CH₂CH₂CH₂CH₃, CHO, COCH₃, COCH₂CH₃, COCH₂CH₂CH₃ und COCH₂CH₂CH₂CH₃, bevorzugt aus der Gruppe enthaltend H, CH₃, CH₂CH₃ und COCH₃ und besonders bevorzugt aus der Gruppe enthaltend CH₃, CH₂CH₃ und COCH₃. Als Monomere der allgemeinen Formel (I) können Mischungen von mehreren verschiedenen Monomeren der allgemeinen Formel (I) eingesetzt werden, die sich beispielsweise in den Resten R¹, R² und/oder R³ oder in der Zahl der Wiederholungseinheiten "n" unterscheiden.

Beispiele für Monomere derallgemeinen Formel (I) sind Polyethylenglycolacrylat, Polyethylenglycolmethacrylat, Polypropylenglycolacrylat, Polypropylenglycolmethacrylat, gemischtes Poly(ethylenglycolpropylenglycol)acrylat oder Poly(ethylenglycolpropylenglycol)methacrylat oder Poly(THF)acrylat oder Poly(THF)methacrylat. Besonders bevorzugt wird Methoxy- oder Ethoxy-terminiertes Polyethylenglycolacrylat bzw. -methacrylat, Methoxy- oder Ethoxy-terminiertes Polypropylenglycolacrylat bzw. -methacrylat mit 2 bis 25 Ethylenglycol- oder Propylenglycol-Wiederholungseinheiten, ganz besonders bevorzugt mit 2 bis 20 Ethylenglycol- oder Propylenglycol-Wiederholungseinheiten.

Der Gehalt an Wiederholungseinheiten der allgemeinen Formel (I) beträgt bevorzugt 2 bis 40 Gew.-%, besonders bevorzugt 4 bis 25 Gew.-% und meist bevorzugt 6 bis 20 Gew.-%, jeweils bezogen auf die Summe der Wiederholungseinheiten i) bis iii).

In einer bevorzugten Ausführungsform beträgt der Anteil Wiederholungseinheiten abgeleitet von Ethylen mehr als 5 Gew.-%, vorzugsweise mehr als 10 Gew.-% und besonders bevorzugt mehr als 20 Gew.-%, und bis 50 Gew.-%, jeweils bezogen auf die Gesamtmenge der Wiederholungseinheiten i) bis iii).

Nicht anspruchsgemäß verwendete Copolymerisate können weiterhin noch ein oder mehrere weitere copolymerisierte Monomere (iv), d.h. Copolymere die nicht unter die obige Definition der Monomere der Wiederholungseinheiten i) bis iii) fallen, aufweisen und zwar in einer Gesamtmenge von weniger als 25 Gew.-%, bevorzugt weniger als 20 Gew.-%, weiter bevorzugt weniger als 15 Gew.-%, noch weiter bevorzugt weniger als 10 Gew.-%, besonders bevorzugt weniger als 5 Gew.-% und ganz besonders bevorzugt weniger als 1 Gew.-%, jeweils bezogen auf die Gesamtmenge der Wiedeholungseinheiten i) bis iii) und der ein oder mehreren weiteren copolymerisierten Monomere (iv).

Diese weiteren Monomere (iv) werden typischerweise ausgewählt aus der Gruppe enthaltend epoxygruppenhaltige Acrylate, epoxygruppenhaltige Methacrylate, Alkoxyalkylacrylate mit einer Alkoxyalkylgruppe mit 2 bis 8 Kohlenstoffatomen, Vinylketone, vinylaromatische Verbindungen, konjugierte Diene, α-Monoolefine, Vinylmonomere mit einer Hydroxylgruppe, Chlorvinylacetat, Maleinsäuremonoalkylester, Fumarsäuremonoalkylester, Acrylsäure, Methacrylsäure, Vinylidenfluorid, Hexafluorpropen, Vinylidenchlorid, Tetrafluorethylen, Tetrachlorethylen, Vinylchlorid, ungesättigte Amidmonomere und Kohlenmonoxid und Mischungen dieser Monomere, vorzugsweise aus Methylacrylat, Ethylacrylat, Propylacrylat, n-Butylacrylat, 2-Ethylhexylacrylat, n-Octylacrylat, Glycidylmethacrylat, Divinyladipat, Methylvinylketon, Ethylvinylketon, Styrol, α-Methylstyrol, Vinyltoluol, Butadien, Isopren, Propylen, 1-Buten, β-Hydroxyethylacrylat, 4-Hydroxybutylacrylat, 3-Cyanoethylacrylat,

Acrylamid, N-Methylmethacrylamid, 2-Methoxyethylacrylat, Chlorvinylacetat, Maleinsäuremonoalkylester, Fumarsäuremonoalkylester Kohlenmonoxid und Mischungen dieser Monomere und besonders bevorzugt aus Acrylsäure, Methacrylsäure, 2-Methoxyethylacrylat, Glycidylmethacrylat, Chlorvinylacetat, Maleinsäuremonoalkylester, Fumarsäuremonoalkylester, Kohlenmonoxid und Mischungen dieser Monomere.

In einer besonders bevorzugten Ausführungsform handelt es sich bei den erfindungsgemäß verwendeten Copolymerisaten um Copolymere enthaltend Wiederholungseinheiten, in Mengen wie in den Ansprüchen definiert, abgeleitet vonEthylen Methylacrylat und polyalkylenglycolhaltigen (Meth)acrylaten mit 2 bis 20 Ethylenglycol- und/oder Propylenglycol-Wiederholungseinheiten. In weiteren bevorzugten Ausführungsformen sind zudem Wiederholungseinheiten abgeleitet von Butylacrylat, enthalten.

In einer weiteren besonders bevorzugten Ausführungsform handelt es sich bei den erfindungsgemäßen Copolymerisaten um Copolymere wie in den Ansprüchen definiert, wobei die Copolymere Wiederholungseinheiten abgeleitet von mindestens zwei Alkylacrylaten, vorzugsweise Ethyl- und Butylacrylat, und polyalkylenglycolhaltigen (Meth)acrylaten mit 2 bis 20 Ethylenglycol- und/oder Propylenglycol-Wiederholungseinheiten enthalten.

Bei den erfindungsgemäß verwendeten Copolymerisaten sind die Monomere statistisch verteilt, alternierend oder blockweise, vorzugsweise statistisch verteilt angeordnet.

Die Glastemperaturen der erfindungsgemäß verwendeten Copolymerisate liegen typischerweise im Bereich von +10 °C bis -50 °C, vorzugsweise im Bereich von 0 °C bis -45 °C und besonders bevorzugt im Bereich von -5 °C bis -40 °C (gemessen mittels DSC mit einer Heizrate von 20 K/min).

Ein Verfahren zur Herstellung von Copolymerisaten, in welchem Acrylate, Monomere der allgemeinen Formel (I) und ggf. ein oder mehrere weitere Monomere (iv) radikalisch polymerisiert werden wird beschrieben.

In einer bevorzugten Ausführungsform wird das Verfahren zur Herstellung der erfindungs-gemäß verwendeten Copolymerisate derart durchgeführt, dass nach dem Start der Polymerisationsreaktion Monomere der allgemeinen Formel (I) zur Reaktionsmischung zugegeben werden. Die Reaktionsmischung kann bereits beim Start der Polymerisationsreaktion einen Teil der insgesamt eingesetzten Menge an Monomeren der allgemeinen Formel (I) enthalten oder es können sämtliche Monomere der allgemeinen Formel (I) erst nach dem Start der Polymerisationsreaktion zudosiert werden.

Die vorliegende Erfindung betrifft auch vulkanisierbare Mischungen enthaltend erfindungsgemäße Copolymerisate und ggf. einen oder mehrere Vernetzer. Letztere sind nicht erforderlich für Zusammensetzungen die mittels Strahlenvernetzung vulkanisiert werden. Die Ausdrücke Mischungen und Zusammensetzungen können in dieser Anmeldung als äquivalent betrachtet werden.

Als Vernetzer kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, tert-Butylperbenzoat, 2,2 Bis(t-butylperoxy)buten, 4,4-di-tert-Butylperoxynonylvalerat, Dicumylperoxid, 2,5-Dimethyl-2,5-di(t-butylperoxy)hexan, tert-Butylcumylperoxid, 1,3-Bis(t-butylperoxyisopropyl)benzol, Di-t-butylperoxid und 2,5-Dimethyl-2,5-di(t-butylperoxy)-hexyn-3. Die Gesamtmenge des oder der Vernetzer liegt üblicherweise im Bereich von 0,5 bis 15 phr, bevorzugt im Bereich von 1 bis 10 phr und besonders bevorzugt im Bereich von 1,5 bis 6 phr, bezogen auf die erfindungsgemäßen Copolymerisate. Dabei können bevorzugt geträgerte Peroxide verwendet werden, wobei die angegebenen Mengen um die Menge des Trägers korrigiert werden müssen.

Es kann vorteilhaft sein, neben diesen peroxidischen Vernetzern weitere Zusätze, sogenannte Coagentien, zu verwenden, mit deren Hilfe die Vernetzungsausbeute erhöht werden kann: Hierfür sind beispielsweise Triallylisocyanurat, Triallylcyanurat, Trimethylolpropantrimethacrylat, Triallyltrimellitat, Ethylenglycoldimethacrylat, Butandioldimethacrylat, Trimethylolpropantriacrylat, Zinkdiacrylat, Zinkdimethacrylat, 1,2-Polybutadien oder N,N'-m-Phenylendimaleinimid geeignet. Die Gesamtmenge des oder der Coagentien liegt üblicherweise im Bereich von 0,2 bis 10 phr, bevorzugt 0,4 bis 4 phr, besonders bevorzugt 0,6 bis 2 phr bezogen auf die erfindungsgemäßen Copolymerisate. Auch hier können geträgerte Verbindungen eingesetzt werden, wobei die angegebenen Mengen um die Masse des Trägers korrigiert werden müssen.

An Stelle einer peroxidischen Vernetzung kann im Falle von Epoxyfunktionalitäten enthaltenden erfindungsgemäßen Copolymerisaten, wie sie beispielsweise durch Verwendung von Glycidylmethacrylat als zusätzliches Monomer eingeführt werden können, eine Vernetzung auch durch Zugabe einer Polysäure oder eines Polysäureanhydrides und geeigneter Beschleuniger durchgeführt werden. Als Polysäure kann z.B. Glutarsäure oder Adipinsäure und als Beschleuniger Tetrabutylammoniumbromid verwendet werden.

Im Falle von Fumarsäure- oder Maleinsäuremonoalkylester enhaltenden Copolymeren wird meist mit einer aliphatischen oder aromatischen Diaminverbindung als Vulkanisationsmittel und einer Base als Vulkanisationsbeschleuniger gearbeitet. Aliphatische oder aromatische Diaminverbindung beinhalten z.B. Hexamethylendiamin, Hexamethylendiamincarbamat, 4,4'-Methylendianilin, m-Phenylendiamin, 4,4'-Diamindiphenylether, p-Phenylendiamin, p,p'-Ethylendianilin, 4,4'-(p-Phenylendiisopropyliden)dianilin, 4,4'-(m-Phenylendiisopropyliden)dianilin, 3,4'-Diaminodiphenylether, 4,4'-Diaminodiphenylsulfon, 2,2-Bis[4-(4-aminophenoxy)phenyl)propan, Bis[4-(4-aminophenoxy)phenyl]sulfon, Bis[4-(3-aminophenoxy)phenyl]sulfon, 4,4'Bis(4-aminophenoxy)biphenol, Bis[4-(4-aminophenoxy)phenyl]ether, 2,2-Bis[4(4-aminophenoxy)phenyl]hexafluorpropan, 1,4-Bis(4-aminophenoxy)benzol und 1,3-Bis(4-aminophenoxy)benzol, unter denen p-diaminosubstituierte Verbindungen und Hexamethylendiamincarbamat bevorzugt sind. Die Diaminverbindung wird in einer Menge von etwa 0,1 bis etwa 5 phr verwendet, bevorzugt etwa 0,2 bis etwa 4 phr, besonders bevorzugt etwa 0,5 bis etwa 3 phr. Unterhalb von etwa 0,1 phr wird die Vulkanisation ungenügend sein und ungenügende Eigenschaften bei Druckbeanspruchung können erhalten werden, wohingegen sich über etwa 5 Gew.-Teile Vorvernetzung ereignet mit dem Ausbleiben der Vulkanisation. Als Base können z.B. Guanidin, oder bi- oder polycyclische aminische Basen wie 1,8-diazabicyclo[5.4.0]undec-7-en (DBU), 1,5-diazabicyclo[4.3.0]-5-nonen (DBN), 1,4-diazabicyclo[2.2.2]octan (DABCO) 1,5,7-triazabicyclo[4.4.0]dec-5-en (TBD), 7-methyl-1,5,7-triazabicyclo[4.4.0]dec-5-en (MTBD) und ihre Derivate verwendet werden. Mischungen dieser Verbindungen können ebenfalls eingesetzt werden. Die Chemikalien können in Reinform oder vordispergiert eingesetzt werden. Bei vordispergierten Chemikalien können unter anderem Polyethylenwachse oder Ethylen-Vinylacetat Copolymere als Trägermaterialien verwendet werden. Des Weiteren können die Basen auch in protonierter Form, zum Beispiel mit einem Formiat oder Acetat als Gegenion, verwendet werden.

Die Liste der verwendbaren Guanidine beinhaltet neben Guanidin, Diphenylguanidin (DPG), Tetramethylguanidin, Tetraethylguanidin, N,N'-Di-o-tolylguanidin (DOTG) usw., unter denen Diphenylguanidin und N,N'-Di-o-tolylguanidin bevorzugt sind. Die Base wird in einer Menge von etwa 0,1 bis etwa 10 phr verwendet, bevorzugt etwa 0,3 bis etwa 6 phr, besonders bevorzugt etwa 0,5 bis etwa 4 phr.

Im Falle von Copolymeren mit halogenhaltigen bzw. halogen- und carboxylgruppenhaltigen Wiederholungseinheiten, können unter anderem als Vulkanisationmittel Schwefel, Triazine wie 2,4,6-Trimercapto-S-triazin, oder Trithiocyanursäuren wie 1,3,5-Triazin-2,4,6-trithiol verwendet werden. Als Beschleuniger können unter anderem Guanidine wie zum Beispiel 1,3-Dio-tolylguanidin oder Diphenylguanidin, Thiurame bzw Thiuramdpolyulfide wie zum Beispiel Dipentamethylenthiuramtetrasulfid oder Tetrabutylthiuramdisulfid, Harnstoffderivate wie zum Beispiel N,N'-Diethylthiourea oder N,N'-Dimethylthiourea, Diuron, Tetralkylammoniumhalogenide wie Octadecyltrimethylammoniumbromid, Cetyltrimethylammoniumbromid oder Tetrabutylammoniumbromid, Carboxylate wie zum Beispiel Natrium- oder Kaliumstearat oder Amoniumbenzoat, Stearinsäure, Dithoicarbamate bzw deren Salze wie zum Beispiel Zinkdimethyldithiocarbamat, Zinkdiethyldithiocarbamat, Zinkdibutyldithiocarbamat oder Eisen-Dimethyldithiocarbamat in einer Menge von 1 bis 15 phr bevorzugt in 1,5 bis 10 phr verwendet werden. Die Vulkanisationsmittel können einzeln oder in Kombination verwendet werden.

Alternativ zu diesen Vernetzungsarten ist, auch eine Vernetzung der erfindungsgemäßen Copolymerisate mit Hilfe von energiereichen Strahlen, z.B. Beta- oder Gammastrahlen möglich, wobei auch in diesem Fall die oben erwähnten Coagentien zur Verbesserung der Vernetzungsausbeute eingesetzt werden können.

Optional können derartige vulkanisierbare Mischungen auch noch ein oder mehrere dem Fachmann für Kautschuke geläufige Additive und Faserstoffe enthalten. Diese umfassen z.B. Füllstoffe, Weichmacher, Alterungsschutzmittel, Lichtschutzmittel, Verarbeitungshilfsmittel, Tackifier, Treibmittel, Farbstoffe, Pigmente, Wachse, Harze, organische Säuren und/oder deren Salze, Vulkanisationsverzögerer, Metalloxide, Fasern, sowie Füllstoffaktivatoren oder andere Additive, die in der Gummiindustrie bekannt sind (siehe z.B. Ullmann's Encyclopedia of Industrial Chemistry, VCH Verlagsgesellschaft mbH, D-69451 Weinheim, 1993, Vol. A 23 "Chemicals and Additives", S. 366-417 oder Bayer AG "Manual for the Rubber Industry", 2. Fully revised Edition, Leverkusen, 1993.

Die erfindungsgemäßen vulkanisierbaren Zusammensetzungen können so vorzugsweise auch noch einen oder mehrere Füllstoffe enthalten wie z.B. Ruß, Talkum, Silica, Calciumcarbonat und (calciniertes) Kaolin, (calcinierte) Aluminiumsilikate, besonders bevorzugt Ruß, Silica, calcinierte Aluminiumsilikate, und/oder calciniertes Kaolin.

Die erfindungsgemäßen vulkanisierbaren Zusammensetzungen können auch noch einen oder mehrere Weichmacher, wie z.B. Dioctylsebacat, Dioctyladipat, Phosphorsäureester, TOTM etc. enthalten.

Als Füllstoffaktivatoren kommen z.B. organische Silane, wie Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxy-silan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Octadecyl)methyldimethoxysilan und epoxygruppenhaltige Silane, wie z.B. 3-Glycidoxypropyltrimethoxysilan oder 3-Glycidoxypropyltriethoxysilan, in Betracht. Weitere Füllstoffaktivatoren stellen zum Beispiel grenzflächenaktive Substanzen wie Triethanolamin, Trimethylolpropan, Hexantriol und Polyethylenglycole mit Molekulargewichten von 74 bis 10 000 g/mol dar. Die Menge an Füllstoffmodifikatoren beträgt üblicherweise 0 bis 10 Gew.-Teile, bezogen auf 100 Gew.-Teile des erfindungsgemäßen Copolymerisats.

Als Antioxidantien können den vulkanisierbaren Zusammensetzungen alle dem Fachmann bekannten zugesetzt werden, die üblicherweise in Mengen von 0 bis 5 Gew.-Teile, bevorzugt 0,5 bis 3 Gew.-Teile, bezogen auf 100 Gew.-Teile der erfindungsgemäßen Copolymerisate eingesetzt werden. Bevorzugt werden CDPA und TMQ eingesetzt.

Als Verarbeitungshilfsmittel und/oder Formtrennmittel kommen z.B. gesättigte oder teilweise ungesättigte Fett- und Ölsäuren und deren Derivate (Fettsäureester, Fettsäuresalze, Fettalkohole, Fettsäureamide) in Betracht. Außerdem können Ozonschutzwachse (Handelsname z.B. Antilux^{®}) in geringen Dosierungen als Verarbeitungshilfsmittel eingesetzt werden. Diese Mittel werden in Mengen von 0 bis 10 Gew.-Teile, bevorzugt 0 bis 2 Gew.-Teile, besonders bevorzugt 0 bis 1 Gew.-Teil bezogen auf 100 Gew.-Teile des erfindungsgemäßen Copolymerisats eingesetzt. Zur weiteren Verbesserung der Entformbarkeit können zudem auf die Formoberfläche applizierbare Produkte, wie z.B. Produkte auf Basis von niedermolekularen Silikonverbindungen, Produkte auf Basis von Fluorpolymeren sowie Produkte auf Basis von Phenolharzen eingesetzt werden.

Als Treibmittel zur Herstellung von geschäumten Produkten kann z.B. OBSH oder ADC eingesetzt werden.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon^{®}, Aramid^{®}), Polyestern und Naturfaserprodukte.

Die erfindungsgemäße, vulkanisierbare Zusammensetzung wird vorzugsweise hergestellt, indem man erfindungsgemäße Copolymerisate mit dem Vernetzter, ggf. ein oder mehreren Coagentien und ggf. weiteren Chemikalien und Zuschlagstoffen, die gemeinhin in der Kautschukindustrie eingesetzt werden, wie z.B. den oben genannten mit Hilfe eines üblichen Mischaggregates, z.B. eines Walzwerks oder eines Innenmischers, mischt. Dabei können sowohl ein- als auch mehrstufige Mischverfahren angewendet werden.

Beispielhaft sind nachfolgend zwei Varianten dargestellt, wie die Erfindung ausgeführt werden kann:

### Verfahren A: Herstellung im Innenmischer

Zum Startzeitpunkt erfolgt die Beschickung des Innenmischers (bevorzugt ein Innenmischer mit sogenannter "ineinandergreifender" Rotorgeometrie) mit den erfindungsgemäßen Copolymerisaten und es kommt zur Zerkleinerung des Materials. Nach einem geeigneten Mischzeitraum erfolgt die Zugabe der Füllstoffe und Additive. Das Mischen erfolgt unter Kontrolle der Temperatur mit der Maßgabe, dass das Mischgut für eine geeignete Zeit bei einer Temperatur im Bereich von 80 bis 150 °C verbleibt. Nach einem weiteren geeigneten Mischzeitraum erfolgt die Zugabe der weiteren Mischungsbestandteile wie optional Stearinsäure, Coagentien, Antioxidantien, Weichmacher, Weißpigmente (beispielsweise Titandioxid), Farbstoffen und sonstigen Verarbeitungswirkstoffen. Nach einem weiteren geeigneten Mischzeitraum wird der Innenmischer gelüftet und der Schacht gereinigt. Nach einem weiteren geeigneten Zeitraum wird der Vernetzter zugegeben. Dabei ist die Mischungstemperatur sorgfältig zu kontrollieren um eine Anvulkanisation im Mischer zu verhindern. Ggf. muss die Drehzahl des Rotors verringert werden um die Mischungstemperatur abzusenken. Nach einem weiteren geeigneten Zeitraum wird der Innenmischer unter Erhalt der vulkanisierbaren Mischung entleert. Unter geeigneten Zeiträumen sind einige Sekunden bis einige Minuten zu verstehen. Die so hergestellten vulkanisierbaren Mischungen können in üblicher Weise, etwa durch die Mooney-Viskosität, durch Mooney-Scorch oder durch einen Rheometertest beurteilt werden. Alternativ kann die Mischung ohne Zugabe des Vernetzers ausgeworfen werden und der Vernetzer auf einem Walzwerk eingemischt werden.

### Verfahren B: Herstellung auf der Walze

Die Reihenfolge bei der Zudosierung kann in analoger Weise zu obigem Verfahren A erfolgen.

Die Vulkanisation der erfindungsgemäß verwendeten Copolymerisate bzw. der diese enthaltenden vulkanisierbaren Zusammensetzungen erfolgt typischerweise bei einer Temperatur im Bereich von 100 bis 250 °C, vorzugsweise 140 bis 220 °C, besonders bevorzugt von 160 bis 200 °C. Bei Bedarf kann im Anschluss an die Vulkanisation eine Temperung bei einer Temperatur von etwa 150 bis 200 °C während 1 bis 24 Stunden durchgeführt werden um die Endprodukteigenschaften zu verbessern.

Gegenstand der Erfindung sind auch die durch besagte Vulkanisation erhältlichen Vulkanisate. Darunter sind somit vulkanisierte erfindungsgemäß verwendete Copolymere und vulkanisierte Zusammensetzungen enthaltend die erfindungsgemäß verwendeten Copolymere und vorzugsweise ein oder mehrere Vernetzer zu verstehen. Solche Vulkanisate zeigen sehr gute Werte im Druckverformungstest bei Raumtemperatur und 150 °C, hohe Zugspannungen und gute Bruchdehnungen, sowie eine sehr gute Kombination aus niedriger Ölquellung und niedriger Glasübergangstemperatur.

Die erfindungsgemäß verwendeten Copolymerisate, bzw. daraus hergestellten vulkanisierbaren Mischungen und/oder Vulkanisate können zur Herstellung von ungeschäumten oder geschäumten Formteilen, sowie zur Herstellung von Folien und Überzügen aller Art verwendet werden, insbesondere zur Herstellung von Kabelleitlagen, Kabelmänteln, Dichtungen, Transportbändern, Faltenbälgen, Schläuchen, Zylinderkopfdeckeldichtungen und O-Ringen. Die Erfindung umfaßt somit auch die obigen Formteile, welche die erfindungsgemäßen Vulkanisate enthalten. Die erfindungsgemäßen Vulkanisate können zudem in Kunststoffe gemischt werden, wo sie als nichtflüchtiges Antistatikum dienen. Daher ist auch die Verwendung der erfindungsgemäßen Copolymerisate zur Antistatischausrüstung von Polymeren bzw. antistatisch ausgerüstete Kunststoffe enthaltend die erfindungsgemäßen Vulkanisate ein weiterer Gegenstand der Erfindung.

Zudem können die erfindungsgemäßen verwendeten Copolymerisaten als elastomere Phase in thermoplastischen Vulkanisaten verwendet werden, sowie als Blendkomponente in Kunststoffen oder Kautschuken, vorzugsweise PVC, Polyamid, Polyester und/oder HNBR.

Weitere Einsatzmöglichkeiten bestehen in der Verwendung von erfindungsgemäß verwendeten Copolymerisaten als nicht-flüchtigen Weichmachern und/oder Schlagzähmodifizierern in Kunststoffen vorzugsweise PVC, Polyamid und/oder Polyester.

Daher sind auch thermoplastische Vulkanisate enthaltend die erfindungsgemäßen Vulkanisate als elastomere Phase, sowie Kunststoffe und Kautschuke enthaltend die erfindungsgemäßen Vulkanisate, insbesondere als nicht-flüchtige Weichmacher und Kunststoffe enthaltend die erfindungsgemäßen Vulkanisate als Schlagzähmodifizierer weitere Gegenstände der Erfindung.

Ein wesentlicher Vorteil der Erfindung liegt darin, dass die erfindungsgemäßen Vulkanisate erstmalig eine gute Kombination aus niedriger Glastemperatur und guter Ölbeständigkeit aufweisen.

### Beispiele:

### Messmethoden:

Die Bestimmung der Glasübergangstemperatur (Tg) erfolgt mittels dynamischer Differenzkalorimetrie (engl.: *Differential Scanning Calorimetry* - DSC) nach EN ISO 11357-1:2009 und EN ISO 11357-2:2014, als Inertgas wird Helium verwendet, die Glasübergangstemperatur wird nach dem Wendepunktverfahren bestimmt. Die Temperaturabtastrate beträgt im Falle der Copolymerisate 20K/min, im Falle der Vulkanisate 10K/min.

Die Bestimmung der Zusammensetzung der Copolymerisate erfolgte mittels ¹H NMR (Gerät: Bruker DPX400 mit Software XWIN-NMR 3.1, Messfrequenz 400 MHz).

Die Gelpermeationschromotographie (GPC) wurde gemäß DIN 55672-1, Gelpermeationschromotographie (GPC) Teil 1: Tetrahydrofuran (THF) als Eluationsmittel, mit einem Zusatz von 0,5 Gew.-% Triethylamin durchgeführt. Als Standard diente Polystyrol.

Die Bestimmung der Werte für die Mooney-Viskosität (ML (1+4)100°C) erfolgt jeweils mittels eines Scherscheibenviskosimeters gem. ISO 289 bei 100 °C.

Die Platten für die Bestimmung der mechanischen Eigenschaften wurden in einer Vulkanisierpresse der Firma Werner & Pfleiderer zwischen Teflon-Folien unter den angegebenen Bedingungen vulkanisiert.

Die Härte nach Shore A wurde nach ASTM-D2240-81 gemessen.

Die Zugversuche zur Bestimmung der Spannung in Abhängigkeit von der Deformation wurden nach DIN 53504 bzw. ASTM D412-80 durchgeführt.

Die Heißluftalterung erfolgte nach DIN 53508 / 2000. Es wurde das Verfahren 4.1.1 "Lagerung im Wärmeschrank mit zwangsläufiger Durchlüftung" angewandt.

Die Öl- und Wasserlagerung erfolgte nach DIN ISO 1817.

### Mit Handelsnamen bezeichnete Substanzen:

| | |
|---|---|
| VAMAC GLS | AEM der Firma DuPont: 62,7 Gew.-% Methylacrylat, 33,4 Gew.-% Ethylen, 3,9 Gew.-% Fumarsäuremonoethylester, T_{G} -25,6 °C. |
| VAMAC DP | AEM der Firma DuPont: 59,0 Gew.-% Methylacrylat, 41,0 Gew.-% Ethylen, T_{G} -29 °C. |
| SR550 | Methoxypolyethyleneglycolmethacrylat (M_{w} der PEG-Einheit 350 g/mol), der Fa. Sartomer Europe |
| SR552 | Methoxypolyethyleneglycolmethacrylat Methoxypolyethyleneglycolmethacrylat (M_{w} der PEG-Einheit ca. 553 g/mol), der Fa. Sartomer EuropeAntilux 110 Paraffinwachs der Rheinchemie Rheinau GmbH |
| Rhenofit TAC/S | Triallylcyanurat 70 % auf 30 % Kieselsäure der Rheinchemie Rheinau GmbH |
| Rhenofit DDA | Alterungsschutzmittel (Diphenylaminderivat) der Rheinchemie Rheinau GmbH |
| Perkadox 14-40 B-PD | Geträgertes Di-(tert-butylperoxyisopropyl)benzol der AkzoNobel N.V. |
| Corax^{®} N550/30 | Ruß der Orion Engineered Carbons GmbH |

### Herstellung von Copolymerisaten:

### M1 (Referenzbeispiel, nicht beansprucht)

Die Herstellung des Polymers erfolgte in einem 5 L Rührautoklaven. Hierzu wurden 1492 g einer Lösung bestehend aus 1490,0 g tert-Butanol und 2,0 g Methylacrylat sowie 252,5 g einer Aktivatorlösung bestehend aus 2,5 g AlBN (Azo-bis-(isobutyronitil), und 250,0 g tert.-Butanol Lösung nacheinander bei 30 °C in den 5 L Reaktor eingezogen. Der Reaktor wurde mit Stickstoff beaufschlagt und anschließend wurden 960,0 g Ethylen aufgedrückt. Die Temperatur wurde auf 70 °C erhöht, wobei sich ein Druck von ca. 380 bar einstellt. Anschließend wurde eine Lösung bestehend aus 200,0 g Methylacrylat und 50,0 g SR550 mit einer Geschwindigkeit von ca. 0,46 g/min innerhalb von 9h zur Reaktionsmischung dosiert. Während der ganzen Polymerisation wurde der Druck durch Aufdrücken von Ethylen bei 380 bar ± 10 bar gehalten.

Nach einer Reaktionszeit von 10 h wurde die Ethylenzudosierung gestoppt und die Polymerlösung wurde langsam aus dem 5 L Reaktor in einen Abstoppautoklav gedrückt. Nach Entfernung des Lösungsmittels und der Restmonomere erhielt man 312,0 g eines SR550-Ethylen-Methylacrylat-Copolymeren.
Mn = 48880 g/mol, Mw = 109106 g/mol, Mz = 183890 g/mol
Ethylen = 36,1 Gew.-%, Methylacrylat = 48,2 Gew.-%, SR550= 15,7 Gew.-%
ML(1+4) 100°C = < 10; Tg = -34 °C

### M2 (Referenzbeispiel, nicht beansprucht)

In einem Vierhalskolben, ausgestattet mit Teflonrührer und Intensivkühler, wurden unter Stickstoff 75 g Wasser, 5,5 g Natriumdodecylsulfat, 62 g Ethylacrylat, 24 g Butylacrylat, 12 g SR552 und 2 g Fumarsäuremonoethylester gegeben. Anschließend wurde 0,002 g Natriumformaldehydsulfoxylat und 0,005 g Butylhydroperoxid hinzugegeben. Nach dem Start der Polymerisation stieg die Temperatur auf 30 °C. Nach einer Polymerisationsdauer von 0,5 h wurde das Polymer mit 20 %iger wässriger NaCI-Lösung gefällt. Das Polymer wurde anschließend mit Wasser gewaschen und bei 75 °C im Vakuum getrocknet. Man erhielt 85 g eines Acrylatkautschuks mit folgender Zusammensetzung:
Ethylacrylat: 62 Gew.-%, Butylacrylat: 24,0 Gew.-%, SR552: 12 Gew.-%, Fumarsäuremonoethylester: 2,0 Gew.-%
Tg = -31 °C.

### Herstellung der vulkanisierbaren Mischungen und Vulkanisate

Die Polymere wurden gemäß den in der nachfolgenden Tabelle 1 gezeigten Rezepturen nach Methode B auf der Walze hergestellt.

Die Vulkanisation erfolgte in der Presse bei 180 °C (10 min für 2 mm dicke Platten / Prüfkörper, 12 min für 6 mm dicke Platten / Prüfkörper). Nach der Vulkanisation wurden die Platten bzw. Prüfkörper 4 h bei 175 °C getempert.

Wie aus Tabelle 2 ersichtlich weisen die aus den nicht beanspruchten Referenzpolymeren gemäß M1 und M2 hergestellten, nicht beanspruchte Referenzvulkanisate vergleichbarer Ölquellung deutlich verringerte Glasübergangstemperaturen auf.

**Tabelle 1. Rezepturen der Mischversuche, Mengenangaben in phr**

| **Beispiel Nr.** | **M1** | **M2** | **VM1** | **VM2** |
|---|---|---|---|---|
| Beispiel 1 | 100 | | | |
| Beispiel 2 | | 100 | | |
| Vamac DP | | | 100 | |
| Vamac GLS | | | | 100 |
| Corax N550 | 55 | 55 | 55 | 55 |
| Antilux 110 | 1,0 | | 1,0 | 1,0 |
| Rhenofit DDA | 1,4 | | 1,4 | 1,4 |
| Luvomaxx CDPA | | 2 | | |
| DIAK No 1 | | 0,9 | | |
| Rhenofit TAC/S | 2 | | 2 | 2 |
| Perkadox 14-40 | 5 | | 5 | 5 |
| *Summe* | 164,4 | | 164,4 | 164,4 |

**Tabelle 2. Ergebnisse der Mischversuche**

| **Beispiel-Nr.** | | **M1** | **M2** | **VM1** | **VM2** |
|---|---|---|---|---|---|
| Ethylengehalt im Copolymerisat | Gew.-% | 36,1 | - | 41,0 | 33,4 |
| ML(1+4)100°C | MU | 6 | | 38 | 41 |
| S' min (MDR 180°C) | dNm | 0,2 | 2,6 | 0,5 | 0,5 |
| S' max (MDR 180°C) | dNm | 8,3 | 11,5 | 15,8 | 11,2 |
| S' max-S' min | dNm | 8,1 | 8,9 | 15,3 | 10,7 |
| T95 (MDR 180°C) | s | 501 | 418 | 433 | 484 |

| **Vulkanisation in der Presse bei 180 °C; Temperung 4 h bei 175 °C** | | | | | |
|---|---|---|---|---|---|
| Härte | ShA | 66 | 60 | 68 | 72 |
| Reißdehnung | % | 238 | 112 | 213 | 268 |
| Tg (DSC) | °C | -33 | -31 | -29 | -22 |

| **Lagerung 70 h / 150 °C IRM 903** | | | | | |
|---|---|---|---|---|---|
| Massenänderung | % | 29 | 12 | 35 | 23 |
| Volumenänderung | % | 42 | 16 | 49 | 32 |
| Härte | ShA | 41 | 55 | 50 | 50 |
| Reißdehnung | % | 181 | 98 | 149 | 218 |

Das Beispiel M1 zeigt gegenüber VM1 und VM2 eine deutlich niederere Glastemperatur bei sonst dem Ethylengehalt entsprechenden physikalischen Eigenschaften, wie Reißdehnung, Ölquellung etc. Die überraschend niedere Mooney-Viskosität beim Referenzbeispiel M1 würde sogar eine Erhöhung der zur Vulkanisation verwendeten Peroxidmenge erlauben, durch die eine weitere Verringerung der Ölquellung ermöglicht würde, ohne eine Erhöhung der Glastemperatur zu bewirken.

## Patentansprüche

1. Verwendung von Copolymerisaten enthaltend
i) 49 bis 99 Gew.-%, vorzugsweise 55 bis 90 Gew.-% Wiederholungseinheiten abgeleitet von mindestens einem Alkylacrylat welches von den Wiederholungeinheiten ii) verschieden ist,
ii) 1 bis 51 Gew.-% Wiederholungseinheiten abgeleitet von mindestens einem Monomer der allgemeinen Formel (I)
CH₂=C(R¹)(COO(R²O)ₙR³) (I)
worin
R¹ für Wasserstoff oder Methyl,
R² jeweils unabhängig voneinander für eine lineare oder verzweigte C₂ bis C₆-Alkylengruppe
R³ für Wasserstoff, unsubstituiertes oder mit C₁-C₃ Alkyl substituiertes Phenyl, eine lineare oder verzweigte C₁-C₈ Alkylgruppe oder -C(=O)R⁴,
R⁴ für Wasserstoff oder eine lineare oder verzweigte C₁-C₈ Alkylgruppe und
n für eine Zahl von 2 bis 30 steht, und
iii) 5 bis 50 Gew.-%, vorzugsweise 5 bis 45 Gew.-% Wiederholungseinheiten abgeleitet von Ethylen,
wobei die Mengen jeweils bezogen sind auf die Gesamtmenge der Wiederholungseinheiten i) bis iii),
wobei die Wiederholungseinheiten aus den Wiederholungseinheiten i) bis iii) bestehen,
zur Herstellung von vulkanisierbaren Zusammensetzungen und Vulkanisaten.

2. Verwendung von Copolymerisaten gemäß Anspruch 1, wobei die Alkylacrylate einen Alkylrest mit 1 bis 10 Kohlenstoffatome aufweisen und vorzugsweise ausgewählt sind aus Methylacrylat, Ethylacrylat, Propylacrylat, Isopropylacrylat, n-Butylacrylat, n-Hexylacrylat, 3-Propylheptylacrylat, 2-Ethylhexylacrylat, n-Octylacrylat, sowie Mischungen dieser Acrylate, besonders bevorzugt Methylacrylat, Ethylacrylat und n-Butylacrylat, sowie Mischungen dieser Acrylate.

3. Verwendung von Copolymerisaten gemäß Anspruch 1 oder 2, wobei die Copolymerisate 2 bis 40 Gew.-%, vorzugsweise 4 bis 25 Gew.-% und besonders bevorzugt 6 bis 20 Gew.-% Monomere der allgemeinen Formel (I), jeweils bezogen auf die Summe der Wiederholungseinheiten i) bis iii) enthalten.

4. Verwendung von Copolymerisaten gemäß einem der Ansprüche 1 bis 3, wobei die Reste R² unabhängig voneinander ausgewählt sind aus der Gruppe bestehend aus Ethan-1,2-diyl, Propan-1,3-diyl, Propan-1,2-diyl, Butan-1,4-diyl, Butan-1,3-diyl, Pentan-1,3-diyl, Pentan-1,4-diyl, Pentan-1,5-diyl und 2-Methylbutan-1,4-diyl, vorzugsweise aus Ethan-1,2-diyl, Propan-1,3-diyl, Propan-1,2-diyl und Butan-1,4-diyl, besonders bevorzugt aus Ethan-1,2-diyl und Propan-1,2-diyl.

5. Verwendung von Copolymerisaten gemäß einem der Ansprüche 1 bis 4, wobei die Reste R³ ausgewählt sind aus der Gruppe bestehend aus H, CH₃, CH₂CH₃, CH₂CH₂CH₃, CH₂CH₂CH₂CH₃, CHO, COCH₃, COCH₂CH₃, COCH₂CH₂CH₃ und COCH₂CH₂CH₂CH₃, bevorzugt aus H, CH₃, CH₂CH₃ und COCH₃ und besonders bevorzugt aus CH₃, CH₂CH₃ und COCH₃.

6. Verwendung von Copolymerisaten gemäß einem der Ansprüche 1 bis 5, wobei die Copolymerisate Wiederholungseinheiten abgeleitet von Methylacrylat und polyalkylenglycolhaltigen (Meth)acrylaten mit 2 bis 20 Ethylenglycol- und/oder Propylenglycol-Wiederholungseinheiten enthalten, vorzugsweise zusammen mit Wiederholungseinheiten abgeleitet von Butylacrylat.

7. Verwendung von Copolymerisaten gemäß einem der Ansprüche 1 bis 5, wobei die Copolymerisate Wiederholungseinheiten abgeleitet von mindestens zwei Alkylacrylaten, vorzugsweise Ethyl- und Butylacrylat, und polyalkylenglycolhaltigen (Meth)acrylaten mit 2 bis 20 Ethylenglycol- und/oder Propylenglycol-Wiederholungseinheiten enthalten.

8. Verfahren zur Herstellung von vulkanisierbaren Zusammensetzungen durch Mischen von Copolymerisaten gemäß einem der Ansprüche 1 bis 7 mit einem oder mehreren Vernetzern.

9. Vulkanisierbare Zusammensetzungen enthaltend Copolymerisate gemäß einem der Ansprüche 1 bis 7, ein oder mehrere Vernetzer, und ggf. Coagentien zur Erhöhung der Vernetzungsausbeute.

10. Verfahren zur Herstellung von Vulkanisaten durch Vernetzung von vulkanisierbaren Zusammensetzungen gemäß Anspruch 9.

11. Vulkanisate erhältlich aus Copolymerisaten gemäß einem der Ansprüche 1 bis 7, vulkanisierbaren Zusammensetzungen gemäß Anspruch 9 und/oder durch ein Verfahren gemäß Anspruch 10.

12. Verwendung von Copolymerisaten gemäß einem der Ansprüche 1 bis 7 zur Herstellung von ungeschäumten oder geschäumten Formteilen, vorzugsweise Kabelleitlagen, Kabelmänteln, Dichtungen, Transportbändern, Faltenbälgen, Schläuchen, Zylinderkopfdeckeldichtungen und O-Ringen.

13. Thermoplastische Vulkanisate enthaltend Vulkanisate gemäß Anspruch 11 als elastomere Phase.

14. Kunststoffe und Kautschuke enthaltend Vulkanisate gemäß Anspruch 11.

## Claims

1. Use of copolymers containing
i) 49 to 99 wt%, preferably 55 to 90 wt%, of repeat units derived from at least one alkyl acrylate other than repeat units ii),
ii) 1 to 51 wt% of repeat units derived from at least one monomer of general formula (I)
CH₂=C(R¹)(COO(R²O)ₙR³) (I)
where
R¹ represents hydrogen or methyl,
R² at each occurrence independently represents a linear or branched C₂ to C₆ alkylene group,
R³ represents hydrogen, unsubstituted or C₁-C₃ alkyl substituted phenyl, a linear or branched C₁-C₈ alkyl group or -C(=O)R⁴,
R⁴ represents hydrogen or a linear or branched C₁-C₈ alkyl group, and
n represents a number from 2 to 30, and
iii) 5 to 50 wt%, preferably 5 to 45 wt%, of repeat units derived from ethylene,
wherein the amounts are each based on the combined amount of repeat units i) to iii),
wherein the repeat units consist of repeat units i) to iii),
in the manufacture of vulcanizates and vulcanizable compositions.

2. Use of copolymers according to Claim 1, wherein the alkyl acrylates have an alkyl moiety of 1 to 10 carbon atoms and preferably are selected from methyl acrylate, ethyl acrylate, propyl acrylate, isopropyl acrylate, n-butyl acrylate, n-hexyl acrylate, 3-propylheptyl acrylate, 2-ethylhexyl acrylate, n-octyl acrylate and also mixtures thereof, more preferably methyl acrylate, ethyl acrylate and n-butyl acrylate and also mixtures thereof.

3. Use of copolymers according to Claim 1 or 2, wherein the copolymers contain 2 to 40 wt%, preferably 4 to 25 wt% and more preferably 6 to 20 wt% of monomers of general formula (I), all based on the sum total of repeat units i) to iii).

4. Use of copolymers according to any of Claims 1 to 3, wherein the R² moieties at each occurrence are independently selected from the group consisting of ethane-1,2-diyl, propane-1,3-diyl, propane-1,2-diyl, butane-1,4-diyl, butane-1,3-diyl, pentane-1,3-diyl, pentane-1,4-diyl, pentane-1,5-diyl and 2-methylbutane-1,4-diyl, preferably from ethane-1,2-diyl, propane-1,3-diyl, propane-1,2-diyl and butane-1,4-diyl, more preferably from ethane-1,2-diyl and propane-1,2-diyl.

5. Use of copolymers according to any of Claims 1 to 4, wherein the R³ moieties are selected from the group consisting of H, CH₃, CH₂CH₃, CH₂CH₂CH₃, CH₂CH₂CH₂CH₃, CHO, COCH₃, COCH₂CH₃, COCH₂CH₂CH₃ and COCH₂CH₂CH₂CH₃, preferably from H, CH₃, CH₂CH₃ and COCH₃ and more preferably from CH₃, CH₂CH₃ and COCH₃.

6. Use of copolymers according to any of Claims 1 to 5, wherein the copolymers contain repeat units derived from methyl acrylate and polyalkylene glycol (meth)acrylates having 2 to 20 ethylene glycol and/or propylene glycol repeat units, preferably together with repeat units derived from butyl acrylate.

7. Use of copolymers according to any of Claims 1 to 5, wherein the copolymers contain repeat units derived from two or more alkyl acrylates, preferably ethyl acrylate and butyl acrylate, and polyalkylene glycol (meth)acrylates having 2 to 20 ethylene glycol and/or propylene glycol repeat units.

8. Process for producing vulcanizable compositions by mixing copolymers according to any of Claims 1 to 7 with one or more crosslinkers.

9. Vulcanizable compositions containing copolymers according to any of Claims 1 to 7, one or more crosslinkers and optionally coagents for enhancing the crosslinking yield.

10. Process for producing vulcanizates by crosslinking vulcanizable compositions according to Claim 9.

11. Vulcanizates obtainable from copolymers according to any of Claims 1 to 7, vulcanizable compositions according to Claim 9 and/or by a process according to Claim 10.

12. Use of copolymers according to any of Claims 1 to 7 in the manufacture of foamed or unfoamed mouldings, preferably cable conduction layers, cable sheathing, gaskets, transport belts, bellows, hoses, cylinder head cover gaskets and O-rings.

13. Thermoplastic vulcanizates containing vulcanizates according to Claim 11 as elastomeric phase.

14. Plastics and rubbers containing vulcanizates according to Claim 11.

## Revendications

1. Utilisation de copolymères contenant
i) 49 à 99 % en poids, de préférence 55 à 90 % en poids de motifs répétitifs issus d'au moins un acrylate d'alkyle qui est différent des motifs répétitifs ii),
ii) 1 à 51 % en poids de motifs répétitifs issus d'au moins un monomère de formule générale (I)
CH₂=C(R¹)(COO(R²O)ₙR³) (I)
dans laquelle
R¹ représente hydrogène ou méthyle,
R² représente à chaque fois indépendamment les uns des autres un groupe C₂ à C₆-alkylène linéaire ou ramifié,
R³ représente hydrogène, phényle non substitué ou substitué par C₁-C₃ alkyle, un groupe C₁-C₈ alkyle linéaire ou ramifié ou -C(=O)R⁴,
R⁴ représente hydrogène ou un groupe C₁-C₈ alkyle linéaire ou ramifié et
n représente un nombre de 2 à 30, et
iii) 5 à 50 % en poids, de préférence 5 à 45 % en poids de motifs répétitifs issus d'éthylène,
les quantités se rapportant à chaque fois à la quantité totale des motifs répétitifs i) à iii),
les motifs répétitifs étant constitués des motifs répétitifs i) à iii),
pour la préparation de compositions vulcanisables et de vulcanisats.

2. Utilisation de copolymères selon la revendication 1, les acrylates d'alkyle présentant un radical alkyle comportant 1 à 10 atomes de carbone et de préférence étant choisis parmi l'acrylate de méthyle, l'acrylate d'éthyle, l'acrylate de propyle, l'acrylate d'isopropyle, l'acrylate de n-butyle, l'acrylate de n-hexyle, l'acrylate de 3-propylheptyle, l'acrylate de 2-éthylhexyle, l'acrylate de n-octyle, ainsi que des mélanges de ces acrylates, de manière particulièrement préférablement l'acrylate de méthyle, l'acrylate d'éthyle et l'acrylate de n-butyle, ainsi que des mélanges de ces acrylates.

3. Utilisation de copolymères selon la revendication 1 ou 2, les copolymères contenant 2 à 40 % en poids, de préférence 4 à 25 % en poids et particulièrement préférablement 6 à 20 % en poids de monomères de formule générale (I), à chaque fois par rapport à la somme des motifs répétitifs i) à iii).

4. Utilisation de copolymères selon l'une quelconque des revendications 1 à 3, les radicaux R² étant choisis indépendamment les uns des autres dans le groupe constitué par l'éthane-1,2-diyle, le propane-1,3-diyle, le propane-1,2-diyle, le butane-1,4-diyle, le butane-1,3-diyle, le pentane-1,3-diyle, le pentane-1,4-diyle, le pentane-1,5-diyle et le 2-méthylbutane-1,4-diyle, de préférence parmi l'éthane-1,2-diyle, le propane-1,3-diyle, le propane-1,2-diyle et le butane-1,4-diyle, particulièrement préférablement parmi l'éthane-1,2-diyle et le propane-1,2-diyle.

5. Utilisation de copolymères selon l'une quelconque des revendications 1 à 4, les radicaux R³ étant choisis dans le groupe constitué par H, CH₃, CH₂CH₃, CH₂CH₂CH₃, CH₂CH₂CH₂CH₃, CHO, COCH₃, COCH₂CH₃, COCH₂CH₂CH₃ et COCH₂CH₂CH₂CH₃, préférablement parmi H, CH₃, CH₂CH₃ et COCH₃ et particulièrement préférablement parmi CH₃, CH₂CH₃ et COCH₃.

6. Utilisation de copolymères selon l'une quelconque des revendications 1 à 5, les copolymères contenant des motifs répétitifs issus de l'acrylate de méthyle et de (méth)acrylates contenant un polyalkylèneglycol comportant 2 à 20 motifs répétitifs d'éthylène glycol et/ou de propylène glycol, de préférence conjointement avec des motifs répétitifs issus de l'acrylate de butyle.

7. Utilisation de copolymères selon l'une quelconque des revendications 1 à 5, les copolymères contenant des motifs répétitifs issus d'au moins deux acrylates d'alkyle, de préférence l'acrylate d'éthyle et de butyle, et des (méth)acrylates contenant un polyalkylèneglycol comportant 2 à 20 motifs répétitifs d'éthylène glycol et/ou de propylène glycol.

8. Procédé de préparation de compositions vulcanisables par mélange de copolymères selon l'une quelconque des revendications 1 à 7 avec un ou plusieurs agents de réticulation.

9. Compositions vulcanisables contenant des copolymères selon l'une quelconque des revendications 1 à 7, un ou plusieurs agents de réticulation, et éventuellement des co-agents pour l'augmentation du rendement de réticulation.

10. Procédé de préparation de vulcanisats par réticulation de compositions vulcanisables selon la revendication 9.

11. Vulcanisats pouvant être obtenus à partir de copolymères selon l'une quelconque des revendications 1 à 7, de compositions vulcanisables selon la revendication 9 et/ou par un procédé selon la revendication 10.

12. Utilisation de copolymères selon l'une quelconque des revendications 1 à 7 pour la préparation de corps moulés non moussés ou moussés, de préférence de couches conductrices de câbles, de gaines de câbles, de joints, de bandes transporteuses, de soufflets, de tuyaux, de joints de couvre-culasse et de joints toriques.

13. Vulcanisats thermoplastiques contenant des vulcanisats selon la revendication 11 en tant que phase élastomérique.

14. Matières plastiques et caoutchoucs contenant des vulcanisats selon la revendication 11.
